# EUROPÄISCHE PATENTSCHRIFT

(11) **EP 3 592 994 B1**
(45) Veröffentlichungstag und Bekanntmachung des Hinweises auf die Patenterteilung: **29.11.2023**
(21) Anmeldenummer: 18707369.7
(22) Anmeldetag: 27.02.2018
(51) Int. Cl.: F16B 13/04, F16B 13/06, F16B 31/02

(54) **SPREIZANKER UND VERFAHREN ZUM DEMONTIEREN EINES SPREIZANKERS**
EXPANSION ANCHOR AND PROCESS TO REMOVE AN EXPANSION ANCHOR
ANCRE D'EXPANSION ET PROCÈS POUR ENLEVER UNE ANCRE D'EXPANSION

(30) Priorität: 07.03.2017 EP 17159523
(43) Veröffentlichungstag der Anmeldung: 15.01.2020
(73) Patentinhaber: Hilti Aktiengesellschaft, 9494 Schaan (LI)
(72) Erfinder: ZILTENER, Michael, 8854 Siebnen (CH); DIJKHUIS, Arjen, Detmer, Shanghai 200031 (CN); HAEUSSLER, Karl, 7222 Lunden (CH)
(74) Vertreter: Hilti Aktiengesellschaft Corporate Intellectual Property
(86) Internationale Anmeldenummer: PCT/EP2018/054738
(87) Internationale Veröffentlichungsnummer: WO 2018/162275

(56) Entgegenhaltungen:
- WO-A1-2011/009068
- GB-A- 1 564 237
- US-A1- 2001 028 835

## Beschreibung

Die Erfindung betrifft ein Demontageverfahren für einen in einem Loch verankerten, als Spreizanker ausgeführten Anker, welcher einen Ankerbolzen und zumindest einen Spreizkörper aufweist, wobei am Ankerbolzen ein Spreizbereich für den Spreizkörper vorgesehen ist, wobei am Spreizbereich die Oberfläche des Ankerbolzens nach hinten hin konvergiert, und wobei der Spreizbereich den Spreizkörper bei Zug im Ankerbolzen radial verdrängt und den Anker hierbei verankert, gemäss dem Oberbegriff des Anspruchs 1. Die Erfindung betrifft ferner einen als Spreizanker ausgeführten Anker gemäss dem Oberbegriff des Anspruchs 6. Ein solcher Anker ist ausgebildet mit einem Ankerbolzen, welcher in einem rückwärtigen Bereich des Ankerbolzens einen Kopf aufweist, wobei der Kopf fest am Ankerbolzen angeordnet ist, und zumindest einem am Ankerbolzen angeordneten Spreizkörper, wobei der Ankerbolzen in einem vorderen Bereich des Ankerbolzens einen Spreizbereich für den Spreizkörper aufweist, wobei der Spreizbereich fest am Ankerbolzen angeordnet ist, wobei am Spreizbereich die Oberfläche des Ankerbolzens nach hinten hin konvergiert, und wobei der Spreizbereich den Spreizkörper bei Zug im Ankerbolzen radial verdrängt und den Anker hierbei verankert.

Es sind, beispielsweise aus der US 2016238051 A1, Ankeranordnungen bekannt, bei denen ein Anbauteil mittels einer Mutter, die mit einem Spreizanker verschraubt ist, an einem Substrat gehalten ist. Bei der Montage einer solchen Anordnung wird zunächst der Anker in das Substrat eingesteckt. Durch anschliessendes Anziehen der Mutter am Spreizanker wird der Spreizanker vorgespannt und dabei der Spreizmechanismus des Ankers aktiviert und zugleich das Anbauteil am Substrat gesichert. Soll bei derartigen Spreizankern das Anbauteil wieder demontiert werden, so könnte die Ankermutter wieder abgeschraubt und das Anbauteil abgenommen werden.

Darüber hinaus sind, beispielsweise aus der DE 102013112959 A1, Spreizanker bekannt, welche einen fest mit dem Ankerbolzen des Spreizankers verbundenen Kopf aufweisen. Soll bei solchen Ankern das Anbauteil wieder demontiert, was beispielsweise erforderlich sein kann, wenn eine mit dem Anker bestigte Brandschutzplatte zu Wartungszwecken demontiert werden muss, ist dies nicht durch einfaches Lösen einer Schraubverbindung möglich. Daher schlägt die DE 102013112959 A1 vor, den Kopf des Spreizankers mit einer Art Zange vom Ankerbolzen abzutrennen.

Die DE 102010017722 A1 offenbart Spreizanker, bei denen der Ankerbolzen sowohl einen fest am Ankerbolzen angeordneten Kopf als auch ein Aussengewinde aufweist. Das Aussengewinde soll es ermöglichen, den Spreizanker durch Aufschrauben einer Mutter wiederzuverwenden, nachdem der Kopf zum Zwecke der Demontage des Anbauteils abgetrennt wurde. Das Abtrennen des Kopfes soll gemäss DE 102010017722 A1 mittels eines Ankerbolzenschneiders oder eines Winkelschleifers erfolgen. Der Ankerbolzenschneider beziehungsweise der Winkelschleifer soll gemäss DE 102010017722 A1 an einer speziell hierfür vorgesehenen Position am Anker angesetzt werden, welche so angeordnet ist, dass das Aussengewinde nach dem Abtrennen des Kopfes zugänglich wird.

Die US 3512448 A beschreibt einen Spreizanker, der mittels eines Werkzeugs installiert wird, welches am Ankerbolzen zieht. Der Ankerbolzen weist eine ausserhalb des Bohrlochs liegende Schwächung auf, an welcher der Ankerbolzen reisst, wenn der Installationsvorgang abgeschlossen ist. Das Anbauteil wird durch ein eigenständiges Teil gehalten, welches während des Installationsvorgangs deformiert und in ringförmige Rillen am Ankerbolzen eingedrückt wird.

Die US 2013097845 A1 zeigt einen Anker mit kopflosem Ankerbolzen, wobei der Verankerungsmechanismus des Ankers durch Aufbringen eines Drehmoments aktiviert wird. Um das Erreichen eines Sollzustandes des Verankerungsmechanismus anzuzeigen, weist der Anker eine Sollbruchstelle auf, die bei Erreichen eines Solldrehmoments während der Montage des Ankers bricht. Ein Demontageverfahren ist in der US 2013097845 A1 nicht beschrieben.

Die WO 2011009068 A1 zeigt eine Klemme zum Zusammenklemmen eines Werkstücks, wobei die Klemme einen Gewindebolzen und eine hierauf angeordnete Gewindehülse aufweist, die unter radialer Aufweitung gestaucht wird. Der Gewindebolzen weist eine geschwächte Region auf, an welcher der Gewindebolzen bei Rotation am Gewindebolzen brechen kann.

Die GB1564237 A beschreibt einen Dübel mit Spreizhülse und einem in die Spreizhülse mittels einer ein Gewinde aufweisenden Ankerstange einziehbaren Spreizkörper.

Aufgabe der Erfindung ist es, ein Demontageverfahren für einen verankerten Anker und einen Anker anzugeben, welche bei geringem Aufwand eine besonders einfache, zuverlässige, sichere, für die Umgebung des Ankers schonende und vielzeitig einsetzbare Ankerdemontage ermöglichen.

Die Aufgabe wird erfindungsgemäss durch ein Verfahren mit den Merkmalen des Anspruchs 1 sowie durch einen Anker mit den Merkmalen des Anspruchs 6 gelöst. Bevorzugte Ausführungsformen sind in den jeweils abhängigen Ansprüchen angegeben.

Das erfindungsgemässe Demontageverfahren ist dadurch gekennzeichnet, dass auf den Ankerbolzen des im Loch verankerten Ankers ein Drehmoment und zugleich eine Zugkraft aufgebracht wird und der Ankerbolzen hierbei so weit belastet wird, bis er bricht.

Ein Grundgedanke der Erfindung, auf dem sowohl das erfindungsgemässe Verfahren als auch der erfindungsgemässe Anker beruhen, kann darin gesehen werden, zur Demontage des Ankers und gegebenenfalls zur Demontage eines mit dem Anker verankerten Anbauteils den Ankerbolzen des Ankers gezielt mit einem hohen Drehmoment so zu beaufschlagen, dass der Anker am Ankerbolzen bricht. Insbesondere kann hierbei der Ankerbolzen in ein vorderes Ankerbolzenfragment und ein hiervon separates rückwärtiges Ankerbolzenfragment geteilt werden, und die Verankerung des vormals vom rückwärtigen Endbereich des Ankerbolzens gehaltenen Anbauteils aufgehoben werden. Das hintere Ankerbolzenfragment kann im Anschluss hieran entfernt werden, wohingegen das vordere Ankerbolzenfragment im Loch verbleiben kann. Insbesondere wird der Ankerbolzen also gezielt abgedreht, das heisst es wird gezielt ein Torsionsbruch erzeugt. Es hat sich gezeigt, dass hierdurch der Anker in besonders einfacher Weise besonders zuverlässig demontiert werden kann, wobei zugleich die Belastung für das Substrat und/oder das Anbauteil beim Demontieren besonders gering sein kann, was wiederum für eine anschliessende erneute Verankerung vorteilhaft sein kann, beispielsweise wenn das Anbauteil temporär für Inspektionszwecke abgenommen oder durch ein anderes Anbauteil ersetzt werden soll. Dies kann zum einen darin begründet liegen, dass erfindungsgemäss nicht mit scharfen Trennwerkzeugen am Ankerbolzen hantiert werden muss, und zum anderen darin, dass sich die beim Demontieren vorliegende Lastrichtung von der üblichen Lastrichtung des Ankers unterscheidet, so dass beispielsweise ein Ausbrechen des Substrats besonders einfach vermieden werden kann.

Vor dem Demontieren ist der Anker, insbesondere an seiner Vorderseite, im Loch im Substrat verankert, wohingegen die Rückseite des Ankers vorzugsweise aus dem Loch im Substrat vorsteht und vorzugsweise das Anbauteil hält. Die Verankerung des Ankers ist in einem Verankerungsbereich des Ankers gegeben. Das Drehmoment wird zweckmässigerweise in einem rückwärtigen Bereich des Ankers, der in Längsrichtung des Ankers betrachtet hinter dem Verankerungsbereich des Ankers liegt, auf den Ankerbolzen aufgebracht. Das Loch ist in einem Substrat ausgebildet, vorzugsweise in einem Betonsubstrat. Insbesondere kann das Loch ein Sackloch sein, da das Demontageverfahren keinen Zugang zur Vorderseite des Ankers erfordert. Vorzugsweise ist das Loch ein Bohrloch und/oder mit einer zumindest annähernd zylindrischen Mantelfläche ausgebildet. Sofern ein Anbauteil vorgesehen ist, kann das Demontageverfahren auch zum Demontieren des vom Anker durchlaufenen und/oder vom Anker gehaltenen, insbesondere am Substrat gehaltenen, Anbauteils dienen. Mit dem Verfahren können aber auch Anker demontiert werden, die kein Anbauteil halten, und die beispielsweise versehentlich vorzeitig verankert wurden. Der Vektor des auf den Ankerbolzen aufgebrachten Drehmoments verläuft insbesondere in Richtung der Längsachse des Ankers und/oder des Ankerbolzens, das heisst der Ankerbolzen wird durch das Drehmoment um seine Längsachse tordiert. Sofern hier von der radialen Richtung, axialen Richtung oder Umfangsrichtung die Rede ist, soll sich dies insbesondere auf die Längsachse des Ankers und/oder des Ankerbolzens beziehen. Der Ankerbolzen besteht vorzugsweise aus einem Metallmaterial, insbesondere aus Stahl, und kann auch eine Beschichtung aufweisen. Die Begriffe vorne und hinten beziehungsweise rückwärtig sollen hier vorzugsweise einheitlich verwendet werden.

Grundsätzlich könnte das erfindungsgemässe Verfahren eingesetzt werden, um Anker zu demontieren, welche fehlerhafterweise ohne Anbauteil installiert wurden. Besonders bevorzugt ist es jedoch, dass auf den Ankerbolzen des im Loch verankerten Ankers ein Drehmoment aufgebracht wird und der Ankerbolzen hierbei so weit belastet wird, bis er unter Aufhebung einer durch den Anker gegebenen Verankerung bricht. Insbesondere kann nach der Erfindung vorgesehen werden, dass auf den Ankerbolzen des im Loch verankerten Ankers ein Drehmoment aufgebracht wird und der Ankerbolzen hierbei so weit belastet wird, bis er bricht, und hierbei eine zuvor durch den Anker gegebene Verankerung eines Anbauteils an einem Substrat aufgehoben wird. Es wird also ein Anker gebrochen, der zuvor ein Anbauteil an einem Substrat verankert hat, und durch den Bruch wird die durch diesen Anker gegebene Verankerung des Anbauteils aufgehoben. Dieser vergleichsweise anspruchsvolle Demontagevorgang kann erfindungsgemäss besonders einfach realisiert werden. Das Anbauteil kann anschliessend, gegebenenfalls nach der Demontage eventuell vorhandener zusätzlicher Anker, vom Substrat abgenommen werden, wobei dieses Abnehmen auch als Teil des erfindungsgemässen Demontageverfahrens angesehen werden kann.

Besonders zweckmässig ist es, dass auf den Ankerbolzen des im Loch verankerten Ankers ein Drehmoment aufgebracht wird und der Ankerbolzen hierbei so weit belastet wird, bis er innerhalb des Anbauteils oder des Substrats bricht, vorzugsweise innerhalb des Substrats. Dies kann die Demontage weiter vereinfachen.

Insbesondere kann vorgesehen werden, dass auf den Ankerbolzen des im Loch verankerten Ankers ein Drehmoment aufgebracht wird und der Ankerbolzen hierbei so weit belastet wird, bis er innerhalb des Lochs bricht, insbesondere innerhalb des Lochs im Substrat. Da die Bruchstelle demgemäss im Inneren des Lochs, insbesondere innerhalb des Substrats, liegt, kann der Anker in besonders einfacher Weise ohne Überstand demontiert werden, was unter anderem eine anschliessende Neumontage eines Anbauteils an derselben Stelle erleichtern kann, da überstehende Ankerreste vermieden werden. Um einen Bruch innerhalb des Lochs besonders zuverlässig gezielt herbeiführen zu können, kann eine Sollbruchstelle vor dem Kopf des Ankerbolzens vorgesehen werden.

Der beim erfindungsgemässen Verfahren verwendete Anker ist ein Spreizanker. Ein solcher Spreizanker weist zumindest einen Spreizkörper auf, und am Ankerbolzen ist, insbesondere in einem vorderen Bereich des Ankerbolzens, ein Spreizbereich für den Spreizkörper vorgesehen, welcher den Spreizkörper bei Zug im Ankerbolzen radial verdrängt und den Anker hierbei verankert. Der Spreizkörper kann vorzugsweise eine Spreizhülse sein, welche den Ankerbolzen zumindest bereichsweise umgibt. Am Spreizbereich, der für eine Spreizhülse vorzugsweise als Spreizkonus ausgebildet sein kann, kann die Oberfläche des Ankerbolzens nach hinten hin konvergieren. Vorzugsweise ist der Spreizanker einer vom Typ "kraftkontrollierter Spreizanker".

Zweckmässigerweise bildet der Verankerungsbereich des Ankers, also der Bereich, in welchem der Anker im Bohrloch verankert ist, ein Wiederlager, so dass der Ankerbolzen beim Aufbringen des Drehmoments zur Demontage hinter dem Verankerungsbereich brechen kann. Bei einem Spreizanker wird der Verankerungsbereich des Ankers und somit das Widerlager durch den Spreizkörper und den Spreizbereich gebildet.

In dem erfindungsgemässen Verfahren wird auf den Ankerbolzen des im Loch verankerten Ankers ein Drehmoment und zugleich eine Zugkraft aufgebracht und der Ankerbolzen hierbei so weit belastet, bis er bricht, insbesondere innerhalb des Lochs bricht. Demgemäss wird der Ankerbolzen bei der Demontage zugleich auf Drehung und auf Zug belastet. Dies kann insbesondere im Hinblick auf die Ausführung als Spreizanker vorteilhaft sein. Denn durch die zusätzliche Zugkraft wird der Spreizmechanismus besonders fest verankert, und einem unerwünschten Durchdrehen des Ankerbolzens kann in einfacher Weise besonders wirksam entgegengewirkt werden, so dass am Verankerungsbereich ein besonders zuverlässiges Wiederlager gegeben ist und der Ankerbolzen besonders zuverlässig bricht. Die Zugkraft ist insbesondere nach hinten gerichtete, also insbesondere in der Richtung, die vom Verankerungsbereich zum Kopf des Ankers weist.

Für ein besonders festes Widerlager bei einem Spreizanker kann alternativ oder zusätzlich eine drehfeste Kopplung zwischen Ankerbolzen und Spreizkörper, insbesondere zwischen Ankerbolzen und Spreizhülse, vorgesehen sein. Die drehfeste Kopplung kann beispielsweise durch eine unrunde Querschnittsform des Ankerbolzens am Spreizbereich oder/und durch eine Nase am Ankerbolzen, die radial in die Spreizhülse vorsteht, gebildet sein.

Eine besonders zweckmässige Ausgestaltung liegt darin, dass der Ankerbolzen einen Kopf aufweist ist, und dass das Drehmoment auf den Kopf des Ankerbolzens aufgebracht wird. Insbesondere kann vorgesehen sein, dass zum Aufbringen des Drehmoments ein Demontagewerkzeug am Kopf angesetzt wird. Eine Drehmomenteinleitung auf den Kopf ist, bei besonders einfachem Aufbau des Ankers, in besonders einfacher und schonender Weise möglich. Der Kopf des Ankerbolzens bildet zweckmässigerweise ein globales Querschnittsmaximum des Ankerbolzens, das heisst am Kopf weist der Ankerbolzen seinen grössten Querschnitt auf. Insbesondere kann der Kopf eine Auflagefläche für das Anbauteil bilden, mit welcher das Anbauteil unmittelbar oder mittelbar, beispielsweise über eine Unterlegscheibe, formschlüssig gesichert werden kann. Vorzugsweise kann der Kopf in einem rückwärtigen Endbereich des Ankerbolzens, vorzugsweise am rückwärtigen Ende des Ankerbolzens, angeordnet sein. Insbesondere kann vorgesehen sein, dass der Ankerbolzen im Demontageverfahren so weit belastet wird, bis er vor dem Kopf bricht, und dass er insbesondere so weit belastet wird, bis er zwischen dem Kopf und dem Spreizbereich ist, bricht.

Es ist vorgesehen, dass der Spreizbereich und der Kopf fest am Ankerbolzen angeordnet sind. Insbesondere ist es vorteilhaft, dass der Spreizbereich des Ankerbolzens fest mit dem Kopf des Ankerbolzens verbunden ist, was einen besonders definierten Spannungszustand beim Demontagevorgang und somit eine besonders zuverlässige Demontage ermöglicht. Zweckmässigerweise ist hierzu der Ankerbolzen, insbesondere einschliesslich seines Kopfs und seines Spreizbereichs, monolithisch, das heisst ohne Fügestellen, ausgebildet, was eine feste Verbindung bei besonders geringem Herstellungsaufwand erlaubt. Unter einer festen Verbindung kann insbesondere eine Verbindung verstanden werden, welche nicht zerstörungsfrei lösbar ist.

Vorzugsweise wird das Drehmoment, und gegebenenfalls auch die Zugkraft, mittels eines Demontagewerkzeugs auf den Ankerbolzen, insbesondere auf dessen Kopf aufgebracht. Ein solches Demontagewerkzeugs kann beispielsweise Klauen aufweisen, welche den Kopf, vorzugsweise zum Aufbringen der Zugkraft, umgreifen, wobei die Klauen über ein Profil verfügen, welches zur Drehmomentübertragung in ein korrespondierendes Mitnahmeprofil am Ankerbolzen, insbesondere an dessen Kopf, eingreift.

Ein erfindungsgemässer Anker ist ausgestattet mit einem Ankerbolzen, welcher in einem rückwärtigen Bereich des Ankerbolzens einen Kopf aufweist, und zumindest einem am Ankerbolzen angeordneten Spreizkörper, welcher vorzugsweise als den Ankerbolzen umgebende Spreizhülse ausgebildet ist, wobei der Ankerbolzen in einem vorderen Bereich des Ankerbolzens einen Spreizbereich für den Spreizkörper aufweist. Der Anker ist also als Spreizanker ausgeführt. Er zeichnet sich dadurch aus, dass der Ankerbolzen ein Mitnahmeprofil zum Aufbringen eines Drehmoments auf dem Ankerbolzen aufweist, dass das Mitnahmeprofil am Kopf angeordnet ist, und dass der Kopf einen das Mitnahmeprofil überragenden Bund aufweist, der sich rückwärtig an das Mitnahmeprofil anschliesst. Über dieses Mitnahmeprofil kann, bei geringem Herstellungsaufwand, in besonders einfacher Weise ein Drehmoment auf den Anker aufgebracht werden, insbesondere zum Zwecke der Demontage des Ankers. Im Detail kann der Anker wie schon weiter oben im Zusammenhang mit dem Verfahren erläutert ausgeführt sein. Der Kopf ist vorzugsweise fest am Ankerbolzen angeordnet und besonders bevorzugt monolithisch, das heisst ohne Fügestellen, mit dem Ankerbolzen ausgeführt.

Das Mitnahmeprofil kann vorzugsweise ein Aussenmehrkantprofil sein, welches zweckmässigerweise umfangsseitig am Ankerbolzen angeordnet ist. Beispielsweise kann das Aussenmehrkantprofil eine Aussenverzahnung sein. Hierdurch ist bei besonders geringem Herstellungsaufwand eine besonders zuverlässige Drehmomentübertragung möglich.

Erfindungsgemäss ist das Mitnahmeprofil am Kopf angeordnet, wo es bei besonders geringem Herstellungsaufwand besonders gut zugänglich ist. Grundsätzlich könnte das Mitnahmeprofil auch dem Kopf vorgelagert sein.

Zweckmässigerweise erstreckt sich das Mitnahmeprofil in Axialrichtung nur über ein Teil des Kopfs. Hierdurch können in Axialrichtung eine oder mehrere Stufen gebildet werden, welche zur Zugkrafteinleitung beim Demontageverfahren dienen können. Erfindungsgemäss weist der Kopf einen das Mitnahmeprofil, insbesondere radial, überragenden Bund auf, der sich rückwärtig an das Mitnahmeprofil anschliesst. Gemäss diesem Erfindungsgedanken ist der Kopf an dem hinter dem Mitnahmeprofil angeordneten Bund zumindest bereichsweise querschnittsgrösser als am Mitnahmeprofil. Ein solcher Bund kann zum einen das Mitnahmeprofil abdecken und somit beispielsweise Beschädigungen an dem Mitnahmeprofil oder durch das Mitnahmeprofil in herstellungstechnisch besonders einfacher Weise entgegenwirken. Zum anderen kann am Bund eine Stufe zur Zugkrafteinleitung beim Demontageverfahren gebildet sein.

Es kann vorgesehen werden, dass der Kopf unmittelbar auf dem zu befestigenden Anbauteil zur Auflage kommt. Besonders bevorzugt ist es jedoch, dass der Anker eine Unterlegscheibe aufweist, welche den Ankerbolzen umgibt. Hierdurch kann der Anker auch zur Verankerung von vergleichsweise weichen Platten verwendet werden. Der Ankerbolzen liegt dann mit seinem Kopf auf der Unterlegscheibe auf, welche wiederum auf dem Anbauteil aufliegt, das heisst der Kopf kommt mittelbar auf dem Anbauteil zur Auflage. Die Unterlegscheibe umgibt den Ankerbolzen ringförmig, vorzugsweise geschlossen ringförmig und weist einen Durchgang auf, durch den der Ankerbolzen durchtritt. Zweckmässigerweise ist sie ein vom Ankerbolzen separates Teil.

Beim Demontageverfahren wird das Drehmoment und/oder die Zugkraft vorzugsweise hinter der Unterlegscheibe auf den Ankerbolzen aufgebracht, das heisst auf der dem Spreizkörper und/oder dem Spreizbereich abgewandten Seite der Unterlegscheibe, da dieser Bereich besonders gut zugänglich ist. Das Mitnahmeprofil ist vorzugsweise, insbesondere in axialer Richtung, zwischen dem Bund und der Unterlegscheibe angeordnet ist, so dass eine besonders gute Zugänglichkeit des Mitnahmeprofils gegeben ist.

Zweckmässigerweise ist die Sollbruchstelle für einen Torsionsbruch des Ankerbolzens, also die Stelle, an welcher der Ankerbolzen bei der Demontage in die beiden Ankerbolzenfragmente zerbricht, und/oder das globale Querschnittsminimum des Ankerbolzens relativ weit vorne am Ankerbolzen und somit bei installiertem Anker tief angeordnet. Das vordere Ankerbolzenfragment kann dann entsprechend kurz sein. Insbesondere kann vorgesehen sein, dass ein Grossteil des Lochs nach der Demontage zur erneuten Installation eines Ankers zur Verfügung steht, was eine besonders einfache Neuinstallation ermöglicht. Demgemäss ist es besonders bevorzugt, dass die Sollbruchstelle für einen Torsionsbruch des Ankerbolzens und/oder das globale Querschnittsminimum des Ankerbolzens in der vorderen Hälfte, insbesondere im vorderen Drittel des Ankerbolzens angeordnet ist.

Besonders zweckmässig ist es, dass der Ankerbolzen einen Halsbereich zur Aufnahme des Spreizkörpers, insbesondere der Spreizhülse, aufweist, wobei am Halsbereich ein, insbesondere globales, Querschnittsminimum des Ankerbolzens gegeben ist. Insbesondere kann der Halsbereich in vorteilhafter Weise eine Doppelfunktion innehaben: Er kann einerseits den Spreizkörper vor dem Spreizvorgang aufnehmen und kann andererseits in besonders einfacher Weise die Sollbruchstelle für einen Torsionsbruch des Ankerbolzens definieren, wobei letzteres durch Kerbwirkung unterstützt werden kann. Da sich der Halsbereich an den Spreizbereich anschliesst, kann die Sollbruchstelle dabei in konstruktiv besonders einfacher Weise weit vorne am Ankerbolzen angeordnet werden, was die zuvor erläuterten Vorteile beinhaltet. Wenn der Spreizkörper eine Spreizhülse ist, kann der Halsbereich zweckmässigerweise eine ringförmige Einschnürung des Bolzens sein.

Vorteilhafterweise wird in einem erfindungsgemässen Verfahren als Anker ein erfindungsgemässer Anker eingesetzt. Merkmale, die im Zusammenhang mit dem erfindungsgemässen Verfahren erläutert werden, können auch beim erfindungsgemässen Anker zum Einsatz kommen, so wie auch umgekehrt Merkmale, die im Zusammenhang mit dem erfindungsgemässen Anker erläutert werden, auch beim erfindungsgemässen Verfahren zum Einsatz kommen können. Das Anbauteil kann insbesondere eine Brandschutzplatte sein, welche mittels des Ankers beispielsweise an einem Tübbing in einem Tunnel verankert ist. Es kann erforderlich sein, solche Brandschutzplatten zu Prüf-, Revisions- oder Wartungszwecken zu entfernen. Hierzu kann das erfindungsgemässe Verfahren zum Einsatz kommen.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine perspektivische Darstellung eines Ausführungsbeispiels eines erfindungsgemässen Ankers;
- Figur 2:: eine Seitenansicht des Ankers aus Figur 1;
- Figur 3:: eine Seitenansicht des Ankerbolzens des Ankers aus Figur 1 und Figur 2;
- Figuren 4 bis 6:: aufeinander folgende Stadien bei der Installation des Ankerbolzens der Figuren 1 bis 3;
- Figuren 7 bis 9:: aufeinander folgende Stadien der Demontage des installierten Ankerbolzens der Figuren 1 bis 3 im Rahmen eines erfindungsgemässen Verfahrens;
- Figur 10:: eine vergrösserte Ansicht des Installationswerkzeugs aus Figur 5 und des Kopfes des Ankers; und
- Figur 11:: eine Detailansicht des in Figur 7 nur grob schematisch dargestellten Demontagewerkzeugs.

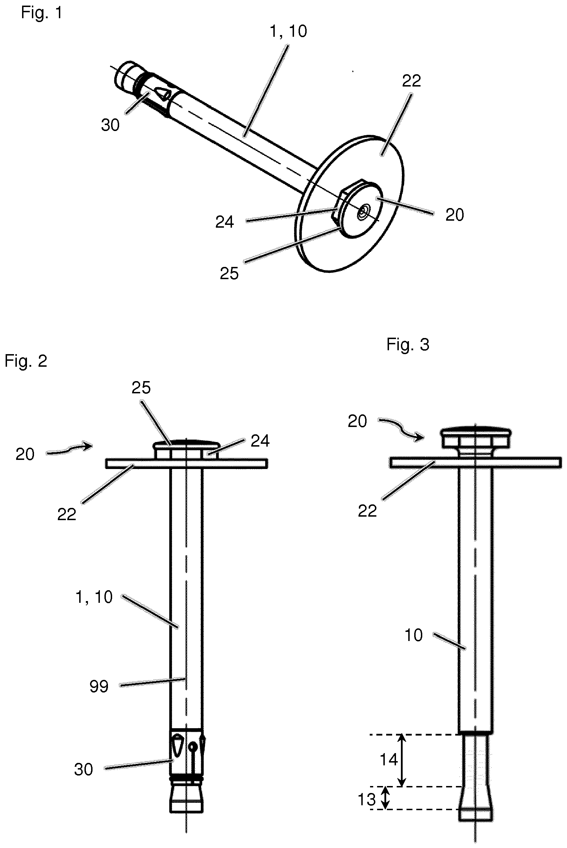

Die Figuren 1 bis 3 zeigen ein erstes Ausführungsbeispiel eines erfindungsgemässen Ankers 1. Der Anker 1 ist als Spreizanker ausgeführt und weist einen länglichen Ankerbolzen 10 und einen als Spreizhülse ausgeführten Spreizkörper 30 auf, welcher den Ankerbolzen 10 ringartig umgibt. In einem entlang der Längsachse 99 des Ankerbolzens 10 vorderen Endbereich weist der Ankerbolzen 10 einen Halsbereich 14 und daran vorderseitig anschliessend einen Spreizbereich 13 auf. Im Halsbereich 14 weist der Ankerbolzen 10 sein globales Querschnittsminimum auf, das heisst dort ist sein Querschnitt am kleinsten. Der als Spreizhülse ausgeführte Spreizkörper 30 ist in diesem Halsbereich 14 aufgenommen. Im Spreizbereich 13 nimmt der Querschnitt des Ankerbolzens 10 nach vorne hin wieder zu, das heisst im Spreizbereich 13 konvergiert der Ankerbolzen 10 nach hinten hin. Beim Verankern des Ankers 1 läuft der Spreizkörper 30 auf den Spreizbereich 13 des Ankerbolzens 10 auf und wird hierbei radial gespreizt.

Der Ankerbolzen 10 weist ferner einen Kopf 20 auf, der am entlang der Längsachse 99 hinteren Ende des Ankerbolzens 10 angeordnet ist. Am Kopf 20 weist der Ankerbolzen 10 sein globales Querschnittsmaximum auf, das heisst dort ist sein Querschnitt am grössten. Der Kopf 20 des Ankerbolzens 10 weist an seiner Vorderseite einen Bereich mit einem Mitnahmeprofil 24 auf, wobei das Mitnahmeprofil 24 hier beispielhaft als Aussensechskantprofil ausgeführt ist. Das Mitnahmeprofil 24 dient zum Aufbringen eines Drehmoments von einem Demontagewerkzeug 60 auf den Ankerbolzen 10. Rückseitig am Mitnahmeprofil 24 weist der Kopf 20 einem ringförmigen Bund 25 auf. Dieser Bund 25 steht in radialer Richtung über das Mitnahmeprofil 24 über. Somit ist zwischen dem Mitnahmeprofil 24 und dem Bund 25 eine axiale Stufe gebildet, an denen das Demontagewerkzeug 60 zum Aufbringen einer nach hinten gerichteten Zugkraft auf den Ankerbolzen 10 angreifen kann.

Im dargestellten Ausführungsbeispiel weist der Anker 1 auch eine Unterlegscheibe 22 auf, welche den Ankerbolzen 10 in Form eines Rings umgibt. Die Durchgangsöffnung in der Unterlegscheibe 22, durch die der Ankerbolzen 10 hindurchtritt, ist querschnittskleiner als der Kopf 20, so dass eine Axialkrafteinleitung vom Kopf 20 auf ein zu befestigendes Anbauteil 9 mittelbar über die Unterlegscheibe 22 erfolgen kann. Die Unterlegscheibe 22 ist vorzugsweise ein vom Ankerbolzen 10 separates Bauteil. Die Unterlegscheibe 22 kann jedoch fakultativ sein, und es ist auch denkbar, dass der Kopf 20 unmittelbar am Anbauteil 9 zur Auflage kommt.

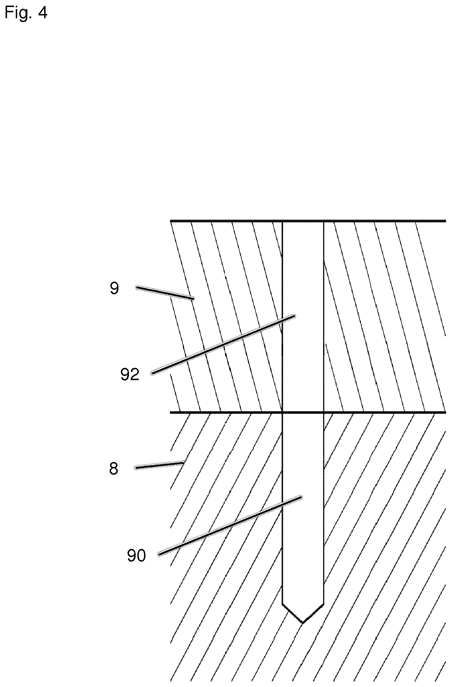

Die Figuren 4 bis 9 zeigen aufeinanderfolgende Stadien beim Installieren und der anschliessenden Durchführung eines erfindungsgemässen Demontageverfahrens unter Verwendung eines Ankers 1 gemäss Figuren 1 bis 3.

Zunächst werden, wie in Figur 4 dargestellt, ein Substrat 8 mit einem etwa zylindrischen Loch 90 sowie ein Anbauteil 9 bereitgestellt, wobei das Anbauteil 9 eine etwa zylindrische Durchgangsöffnung 92 aufweist, welche mit dem Loch 90 im Substrat 8 fluchtet.

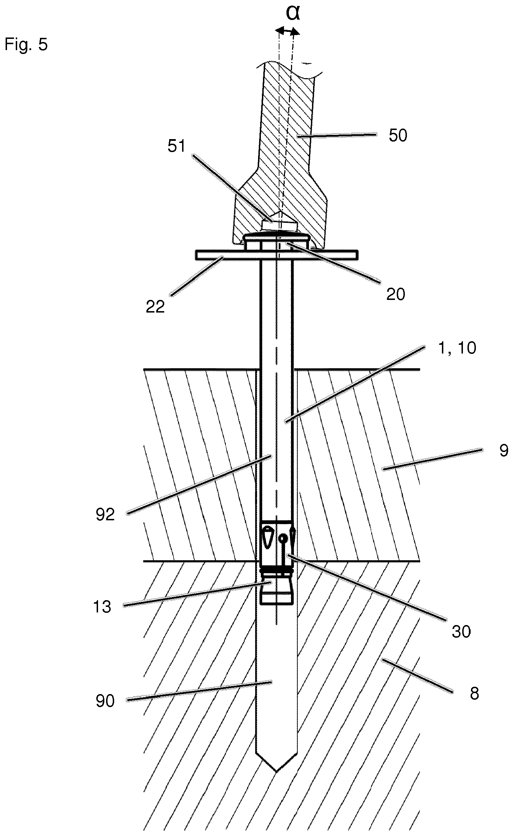

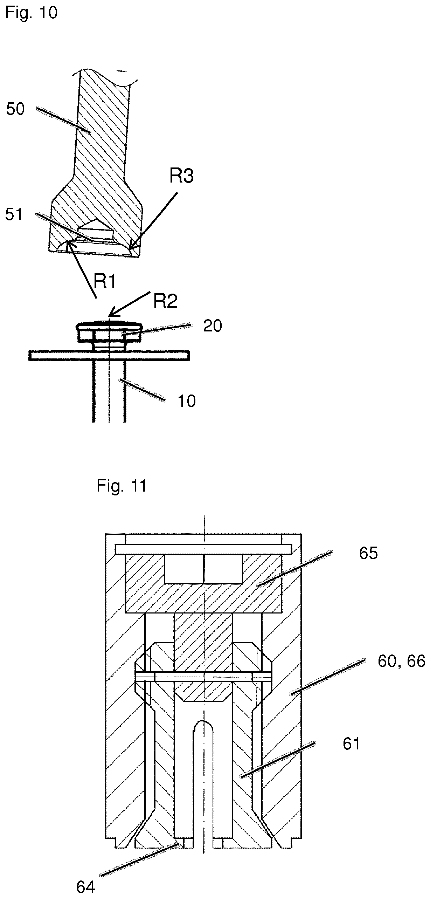

Sodann wird, wie in Figur 5 dargestellt, der Ankerbolzen 10 mit seinem vorderen Ende mit dem Spreizbereich 13 voran in die Durchgangsöffnung 92 im Anbauteil 9 eingeführt und durch Aufbringen von axial nach vorne gerichteten Kräften, das heisst parallel zur Längsachse 99 nach vorne gerichteten Kräfte, in das Loch 90 eingetrieben. Vorzugsweise werden die axial nach vorne gerichteten Kräfte auf den Kopf 20 aufgebracht, beispielsweise mittels Schlägen eines Hammers. Besonders bevorzugt ist es, dass zum Aufbringen der axial nach vorne gerichteten Kräfte auf den Kopf 20 das in Figur 5 und im Detail in Figur 10 dargestellt Installationswerkzeug 50 verwendet wird. Wie insbesondere Figur 10 zeigt, weist das Installationswerkzeug 50 vorderseitig eine Aufnahme 51 für den Kopf 20 des Ankerbolzens 10 auf. Insbesondere kann vorgesehen sein, dass der Kopf 20 des Ankerbolzens 10 an seiner Rückseite einen Ankerradius R2 aufweist, welcher grösser ist als ein Radius R1 des Installationswerkzeugs 50 in der Aufnahme 51, wobei der Radius R1 zweckmässigerweise über einen deutlich kleineren Radius R3 auslaufen kann. Diese Konfiguration kann es ermöglichen, bei der Installation des Ankers 1 Winkelfehler α zu kompensieren und den Installationsvorgang zu beschleunigen, wie es in Figur 5 angedeutet ist.

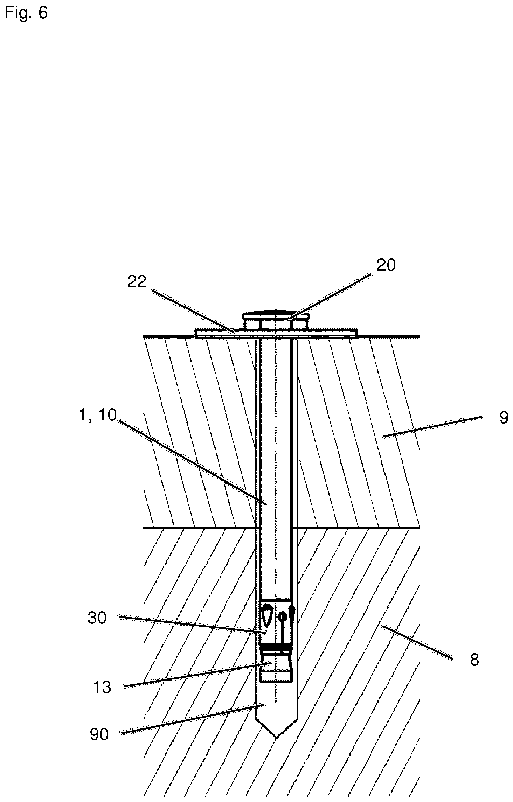

Der Anker 1 wird so tief in das Loch 90 eingetrieben, bis sein Kopf 20 unmittelbar, oder, wie dargestellt, über die fakultativ vorhandenen Unterlegscheibe 22, auf dem Anbauteil 9 anliegt. Der resultierende Zustand ist in Figur 6 gezeigt. Der Anker 1 und das von ihm gehaltene Anbauteil 9 sind nun mittels Spreizmechanismus des Ankers 1, bestehend aus Spreizbereich 13 und Spreizkörper 30, am Substrat 8 verankert.

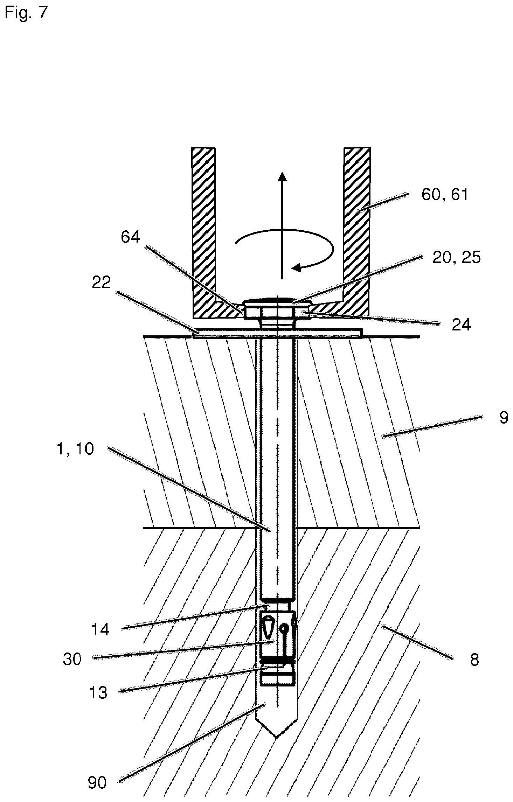

Beispielsweise zum Zwecke des Austauschs eines beschädigten Anbauteils 9 oder zum Zwecke der Inspektion des unter dem Anbauteil 9 liegenden Substrats 8 oder aus anderen Gründen kann es erforderlich werden, die Verankerung wieder zu lösen. Die Figuren 7 bis 9 zeigen aufeinanderfolgende Stadien bei der Durchführung eines hierfür geeigneten erfindungsgemässen Demontageverfahrens.

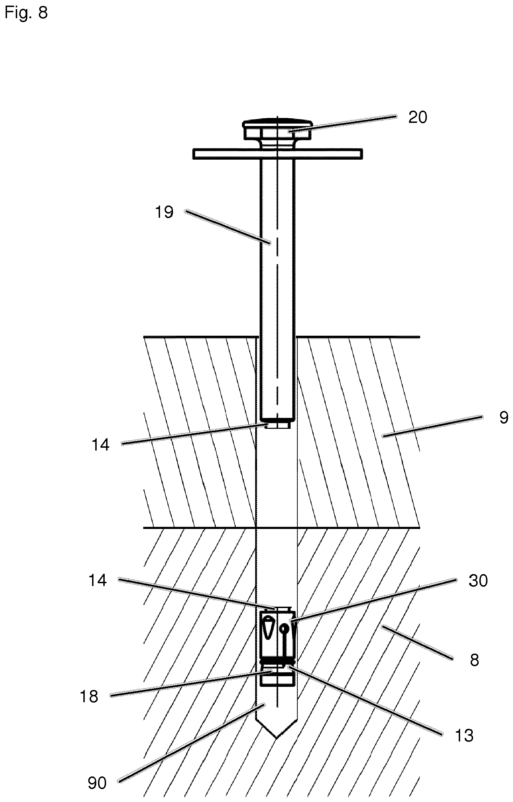

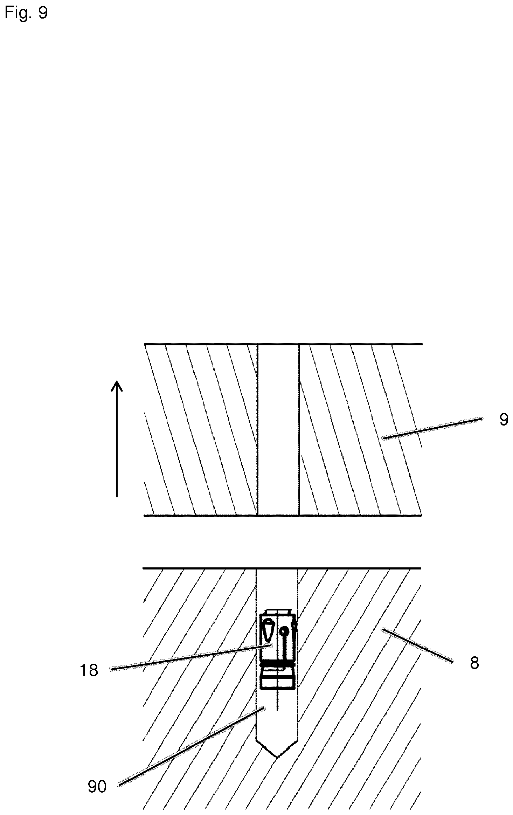

Wie in Figur 7 mit Pfeilen angedeutet ist, wird auf den Ankerbolzen 10 über dessen Kopf 20 ein Drehmoment und vorzugsweise zugleich auch eine Zugkraft aufgebracht. Die Drehmomenteinleitung erfolgt dabei über das Mitnahmeprofil 24 am Kopf 20, die Zugkrafteinleitung am Bund 25 des Kopfes 20. Die Zugkraft hat zur Folge, dass der Spreizbereich 13 tief in den Spreizkörper 30 eingezogen wird, was einem Durchdrehen des Ankerbolzens 10 im Spreizkörper 30 und/oder einem Durchdrehen des Spreizkörpers 30 im Loch 90 entgegenwirkt, und somit dafür sorgt, dass der vordere Endbereich des Ankerbolzens 10 besonders zuverlässig drehfest im Substrat 8 festliegt. Das am Kopf 20 und somit am hinteren Ende des Ankerbolzens 10 aufgebrachte Drehmoment tordiert den vorderseitig drehfest im Substrat 8 festliegende Ankerbolzen 10 so weit, dass es zum kontrollierten Bruch des Ankerbolzens 10 in ein vorderes Ankerbolzenfragment 18 mit zumindest einem Teil des Spreizbereichs 13 und in ein hinteres Ankerbolzenfragment 19 mit dem Kopf 20 kommt, das heisst der Ankerbolzen 10 wird bei der Demontage zerstört. Der resultierende Zustand ist in Figur 8 dargestellt. Nun kann, nachdem gegebenenfalls noch vorhandene weitere Anker gelöst wurden, das Anbauteil 9 wie in Figur 9 mit einem Pfeil angedeutet vom Substrat 8 abgehoben und entfernt werden. Das vordere Ankerbolzenfragment 18 bleibt dabei im Substrat 8 zurück.

Zweckmässigerweise ist eine Sollbruchstelle für den Bruch des Ankerbolzens 10 im erfindungsgemässe Verfahren derart angeordnet, dass das im Substrat 8 zurückbleibende vordere Ankerbolzenfragment 18 kurz genug ist, um nicht am Substrat 8 vorzustehen, das heisst dass das Ankerbolzenfragment 18 vollständig im Loch 90 im Substrat 8 versenkt ist. Dies ermöglicht unter anderem in besonders einfacher Weise eine erneute Montage des zuvor demontierten oder eines anderen Anbauteils, wobei für die erneute Montage unter Umständen sogar das Loch 90 im Substrat 8 abermals verwendet werden kann. Wie ein Vergleich des Figuren 7 und 8 zeigt, befindet sich die Sollbruchstelle für den Bruch des Ankerbolzens 10 im erfindungsgemässe Verfahren vorzugsweise im Halsbereich 14, wo der Ankerbolzen 10 zweckmässigerweise seinen kleinsten Querschnitt aufweist, das heisst der Ankerbolzen 10 bricht im erfindungsgemässen Demontageverfahren vorzugsweise im Halsbereich 14.

Eine solche Sollbuchstelle kann mit besonders geringem konstruktiven Aufwand realisiert werden, da die Dimensionierung des Halsbereichs 14 zur Aufnahme des Spreizkörper 30 ohnehin einen vergleichsweise geringen Querschnitt im Halsbereich 14 erfordert.

Zum Aufbringen des Drehmoments und vorzugsweise auch der Zugkraft auf den Kopf 20 kann insbesondere ein, grob schematisch in Figur 7 und im Detail in Figur 11 dargestelltes, Demontagewerkzeug 60 verwendet werden. Im dargestellten Ausführungsbeispiel weist das Demontagewerkzeug 60 Klauen 61 auf, die, insbesondere endseitig, jeweils ein Profil 64 aufweisen, das mit dem Mitnahmeprofil 24 des Kopfs 20 korrespondiert. Die Profile 64 der Klauen 61 werden wie in Figur 7 gezeigt am Mitnahmeprofil 24 zur Anlage gebracht, und die korrespondierende Ausgestaltung von den Profilen 64 zum Mitnahmeprofil 24 erlaubt eine formschlüssige Drehmomentübertragung vom Demontagewerkzeug 60 auf den Kopf 20. Dabei greifen die Klauen 61 mit ihren Profilen 64 vor dem Bund 25 ein, so dass die Profile 64 axial am Bund 25 anliegen, und eine Zugkraftübertragung vom Demontagewerkzeug 60 auf den Kopf 20 möglich ist. Das Demontagewerkzeug 60 greift also unten am Kopf 20 ein und zerbricht dann den Ankerbolzen 10.

Wie insbesondere Figur 11 zeigt weist das Demontagewerkzeug 60 vorzugsweise eine Kupplung 65 auf, welche einerseits mit einer drehenden Maschine, beispielsweise einem Tangential-Schlagschrauber, gekoppelt werden kann, und welche andererseits mit den Klauen 61 drehfest, aber axial verschiebbar, gekoppelt ist. Ferner weist das Demontagewerkzeug 60 eine Hülse 66 auf, in welcher die Klauen 61 axial verschiebbar gelagert sind. Zwischen der Hülse 66 und den Klauen 61 sind Einlaufschrägen gebildet, welche die Klauen 61 zum Greifen des Ankerbolzens 10, insbesondere des Kopfs 20, radial zusammendrängen, wenn die Klauen 61 in die Hülse 66 eingeschoben werden.

Um die Zugkraft auf das Anbauteil 9 beim Demontageverfahren zu reduzieren, was insbesondere zur Verringerung des Drucks auf das Anbauteil 9 dann vorteilhaft sein kann, wenn das Anbauteil 9 wiederverwendet werden soll, kann der Spreizbereich 13 im Querschnitt unrund, beispielsweise elliptisch oder polygonförmig ausgeformt werden. Durch diese Ausgestaltung wird ein Durchdrehen des Ankerbolzens 10 im Spreizkörper 30 schon bei vergleichsweise geringen Zugkräften gehemmt. Zur Herstellung eines entsprechenden Ankerbolzens 10 kann zunächst der Halsbereich 14 in skalierter Grösse gezogen und anschliessend aufgestaucht werden.

## Patentansprüche

1. Demontageverfahren für einen in einem Loch (90) verankerten, als Spreizanker ausgeführten Anker (1), welcher einen Ankerbolzen (10), und zumindest einen Spreizkörper (30) aufweist, wobei am Ankerbolzen (10) ein Spreizbereich (13) für den Spreizkörper (30) vorgesehen ist, wobei am Spreizbereich (13) die Oberfläche des Ankerbolzens (10) nach hinten hin konvergiert, und wobei der Spreizbereich (13) den Spreizkörper (30) bei Zug im Ankerbolzen (10) radial verdrängt und den Anker (1) hierbei verankert,
**dadurch gekennzeichnet,**
**dass** im Demontageverfahren auf den Ankerbolzen (10) des im Loch (90) verankerten Ankers (1) ein Drehmoment und zugleich eine Zugkraft aufgebracht wird und der Ankerbolzen (10) hierbei so weit belastet wird, bis er bricht.

2. Verfahren nach Anspruch 1,
**dadurch gekennzeichnet,**
**dass** auf den Ankerbolzen (10) des im Loch (90) verankerten Ankers (1) ein Drehmoment aufgebracht wird und der Ankerbolzen (10) hierbei so weit belastet wird, bis er bricht, und hierbei eine zuvor durch den Anker (1) gegebene Verankerung eines Anbauteils (9) an einem Substrat (8) aufgehoben wird.

3. Verfahren nach einem der vorstehenden Ansprüche,
**dadurch gekennzeichnet,**
**dass** auf den Ankerbolzen (10) des im Loch (90) verankerten Ankers (1) ein Drehmoment aufgebracht wird und der Ankerbolzen (10) hierbei so weit belastet wird, bis er innerhalb des Lochs (90) bricht.

4. Verfahren nach einem der vorstehenden Ansprüche,
**dadurch gekennzeichnet,**
**dass** der Ankerbolzen (10) einen Kopf (20) aufweist ist, und dass das Drehmoment auf den Kopf (20) des Ankerbolzens (10) aufgebracht wird.

5. Verfahren nach einem der vorstehenden Ansprüche,
**dadurch gekennzeichnet,**
**dass** das Drehmoment mittels eines Demontagewerkzeugs (60) auf den Ankerbolzen (10) aufgebracht wird.

6. Als Spreizanker ausgeführter Anker (1) mit
- einem Ankerbolzen (10), welcher in einem rückwärtigen Bereich des Ankerbolzens (10) einen Kopf (20) aufweist, wobei der Kopf (20) fest am Ankerbolzen (10) angeordnet ist, und
- zumindest einem am Ankerbolzen (10) angeordneten Spreizkörper (30),
- wobei der Ankerbolzen (10) in einem vorderen Bereich des Ankerbolzens (10) einen Spreizbereich (13) für den Spreizkörper (30) aufweist, wobei der Spreizbereich (13) fest am Ankerbolzen (10) angeordnet ist, wobei am Spreizbereich (13) die Oberfläche des Ankerbolzens (10) nach hinten hin konvergiert, und wobei der Spreizbereich (13) den Spreizkörper (30) bei Zug im Ankerbolzen (10) radial verdrängt und den Anker (1) hierbei verankert,
**dadurch gekennzeichnet,**
**dass** der Ankerbolzen (10) ein Mitnahmeprofil (24) zum Aufbringen eines Drehmoments auf dem Ankerbolzen (10) aufweist,
**dass** das Mitnahmeprofil (24) am Kopf (20) angeordnet ist, und
**dass** der Kopf (20) einen das Mitnahmeprofil (24) überragenden Bund (25) aufweist, der sich rückwärtig an das Mitnahmeprofil (24) anschliesst.

7. Anker (1) nach Anspruch 6,
**dadurch gekennzeichnet,**
**dass** das Mitnahmeprofil (24) ein Aussenmehrkantprofil ist.

8. Anker (1) nach einem der Ansprüche 6 oder 7,
**dadurch gekennzeichnet,**
**dass** er eine Unterlegscheibe (22) aufweist, welche den Ankerbolzen (10) umgibt.

9. Anker (1) nach Anspruch 8,
**dadurch gekennzeichnet,**
**dass** das Mitnahmeprofil (24) zwischen dem Bund (25) und der Unterlegscheibe (22) angeordnet ist.

10. Anker (1) nach einem der Ansprüche 6 bis 9,
**dadurch gekennzeichnet,**
**dass** der Ankerbolzen (10) einen Halsbereich (14) zur Aufnahme des Spreizkörpers (30) aufweist, wobei am Halsbereich (14) ein Querschnittsminimum des Ankerbolzens (10) gegeben ist.

11. Verfahren nach einem der der Ansprüche 1 bis 5,
**dadurch gekennzeichnet,**
**dass** als Anker (1) ein Anker (1) nach einem der Ansprüche 6 bis 10 eingesetzt wird.

## Claims

1. Removal process for an anchor (1) anchored in a hole (90) and designed as an expansion anchor, which has an anchor pin (10) and at least one expansion body (30), wherein an expansion region (13) for the expansion body (30) is provided on the anchor pin (10), wherein the surface of the anchor pin (10) converges towards the rear at the expansion region (13), and wherein the expansion region (13) displaces the expansion body (30) radially under tension in the anchor pin (10) and in doing so anchors the anchor (1),
**characterized in that,**
in the removal process, a torque and at the same time a pulling force is applied to the anchor pin (10) of the anchor (1) anchored in the hole (90), and the anchor pin (10) is loaded thereby to such an extent that it breaks.

2. Process according to claim 1,
**characterized in that**
a torque is applied to the anchor pin (10) of the anchor (1) anchored in the hole (90), and the anchor pin (10) is loaded thereby to such an extent that it breaks, and in doing so an anchoring of an attachment part (9) on a substrate (8), previously provided by the anchor (1), is canceled.

3. Process according to one of the preceding claims,
**characterized in that**
a torque is applied to the anchor pin (10) of the anchor (1) anchored in the hole (90), and the anchor pin (10) is loaded here to such an extent that it breaks within the hole (90).

4. Process according to one of the preceding claims,
**characterized in that**
the anchor pin (10) has a head (20), and **in that** the torque is applied to the head (20) of the anchor pin (10).

5. Process according to one of the preceding claims,
**characterized in that**
the torque is applied to the anchor pin (10) by means of a removal tool (60).

6. Anchor (1) designed as expansion anchor, having
- an anchor pin (10) which has a head (20) in a rear region of the anchor pin (10), wherein the head (20) is fixedly arranged on the anchor pin (10), and
- at least one expansion body (30) arranged on the anchor pin (10),
- wherein the anchor pin (10) has an expansion region (13) for the expansion body (30) in a front region of the anchor pin (10), wherein the expansion region (13) is fixedly arranged on the anchor pin (10), wherein the surface of the anchor pin (10) converges towards the rear at the expansion region (13), and wherein the expansion region (13) displaces the expansion body (30) radially under tension in the anchor pin (10) and in doing so anchors the anchor (1),
**characterized in that**
the anchor pin (10) has a driving profile (24) for applying a torque to the anchor pin (10), **in that** the driving profile (24) is arranged on the head (20), and
**in that** the head (20) has a collar (25) that projects beyond the driving profile (24) and that adjoins the driving profile (24) towards the rear.

7. Anchor (1) according to claim 6,
**characterized in that**
the driving profile (24) is an external polygonal profile.

8. Anchor (1) according to one of claims 6 or 7,
**characterized in that**
it has a washer (22) which surrounds the anchor pin (10).

9. Anchor (1) according to claim 8,
**characterized in that**
the driving profile (24) is arranged between the collar (25) and the washer (22).

10. Anchor (1) according to one of claims 6 through 9,
**characterized in that**
the anchor pin (10) has a neck region (14) for receiving the expansion body (30), wherein a cross-sectional minimum of the anchor pin (10) is provided at the neck region (14).

11. Process according to one of claims 1 through 5,
**characterized in that**
an anchor (1) according to one of claims 6 through 10 is used as an anchor (1).

## Revendications

1. Procédé de démontage pour un élément d'ancrage (1) ancré dans un trou (90) et conçu en tant qu'élément d'ancrage à expansion, lequel présente un boulon d'ancrage (10) et au moins un corps à expansion (30), dans lequel une zone d'expansion (13) pour le corps à expansion (30) est prévue au niveau du boulon d'ancrage (10), dans lequel la surface du boulon d'ancrage (10) converge vers l'arrière au niveau de la zone d'expansion (13), et dans lequel la zone d'expansion (13) déplace radialement le corps à expansion (30) par traction dans le boulon d'ancrage (10) et ancre ainsi l'élément d'ancrage (1),
**caractérisé en ce**
**que**, dans le procédé de démontage, un couple et une force de traction sont appliqués en même temps sur le boulon d'ancrage (10) de l'élément d'ancrage (1) ancré dans le trou (90) et le boulon d'ancrage (10) est ainsi chargé jusqu'à ce qu'il se brise.

2. Procédé selon la revendication 1,
**caractérisé en ce**
**qu'**un couple est appliqué sur le boulon d'ancrage (10) de l'élément d'ancrage (1) ancré dans le trou (90) et le boulon d'ancrage (10) est ainsi chargé jusqu'à ce qu'il se brise, et un ancrage, préalablement fourni par l'élément d'ancrage (1), d'un élément annexe (9) sur un substrat (8) est ainsi supprimé.

3. Procédé selon l'une des revendications précédentes,
**caractérisé en ce**
**qu'**un couple est appliqué sur le boulon d'ancrage (10) de l'élément d'ancrage (1) ancré dans le trou (90) et le boulon d'ancrage (10) est ainsi chargé jusqu'à ce qu'il se brise à l'intérieur du trou (90).

4. Procédé selon l'une des revendications précédentes,
**caractérisé en ce**
**que** le boulon d'ancrage (10) présente est une tête (20), et que le couple est appliqué sur la tête (20) du boulon d'ancrage (10).

5. Procédé selon l'une des revendications précédentes,
**caractérisé en ce**
**que** le couple est appliqué sur le boulon d'ancrage (10) au moyen d'un outil de démontage (60).

6. Élément d'ancrage (1) conçu en tant qu'élément d'ancrage à expansion comportant
- un boulon d'ancrage (10), lequel présente une tête (20) dans une zone arrière du boulon d'ancrage (10), dans lequel la tête (20) est disposée de manière fixe sur le boulon d'ancrage (10), et
- au moins un corps à expansion (30) disposé au niveau du boulon d'ancrage (10),
- dans lequel, dans une zone avant du boulon d'ancrage (10), le boulon d'ancrage (10) présente une zone d'expansion (13) pour le corps à expansion (30), dans lequel la zone d'expansion (13) est disposée de manière fixe sur le boulon d'ancrage (10), dans lequel la surface du boulon d'ancrage (10) converge vers l'arrière au niveau de la zone d'expansion (13), et dans lequel la zone d'expansion (13) déplace radialement le corps à expansion (30) par traction dans le boulon d'ancrage (10) et ancre ainsi l'élément d'ancrage (1),
**caractérisé en ce**
**que** le boulon d'ancrage (10) présente un profil d'entraînement (24) pour l'application d'un couple sur le boulon d'ancrage (10),
**que** le profil d'entraînement (24) est disposé au niveau de la tête (20), et
**que** la tête (20) présente une collerette (25) faisant saillie au-delà du profil d'entraînement (24), laquelle collerette se raccorde par l'arrière au profil d'entraînement (24).

7. Élément d'ancrage (1) selon la revendication 6,
**caractérisé en ce**
**que** le profil d'entraînement (24) est un profil extérieur polygonal.

8. Élément d'ancrage (1) selon l'une des revendications 6 ou 7,
**caractérisé en ce**
**qu'**il présente une rondelle (22) qui entoure le boulon d'ancrage (10).

9. Élément d'ancrage (1) selon la revendication 8,
**caractérisé en ce**
**que** le profil d'entraînement (24) est disposé entre la collerette (25) et la rondelle (22).

10. Élément d'ancrage (1) selon l'une des revendications 6 à 9,
**caractérisé en ce**
**que** le boulon d'ancrage (10) présente une zone de col (14) permettant de recevoir le corps à expansion (30), dans lequel un minimum de la section transversale du boulon d'ancrage (10) est fourni au niveau de la zone de col (14).

11. Procédé selon l'une des des revendications 1 à 5,
**caractérisé en ce**
**qu'**un élément d'ancrage (1) selon l'une des revendications 6 à 10 est utilisé comme élément d'ancrage (1).
